# EUROPEAN PATENT SPECIFICATION

(11) **EP 4 172 711 B1**
(45) Date of publication and mention of the grant of the patent: **27.03.2024**
(21) Application number: 21737781.1
(22) Date of filing: 23.06.2021
(51) Int. Cl.: G01F 15/00, G01F 15/06, G01F 15/063, G05D 7/06, E03B 7/07

(54) **REMOTELY CONTROLLABLE WATER METER AND RELATED MONITORING SYSTEM AND CONTROLLING METHOD**
FERNSTEUERBARER WASSERZÄHLER UND ZUGEHÖRIGES ÜBERWACHUNGSSYSTEM UND STEUERUNGSVERFAHREN
COMPTEUR D'EAU RÉGLABLE À DISTANCE, ET SYSTÈME DE SURVEILLANCE ET PROCÉDÉ DE COMMANDE ASSOCIÉS

(30) Priority: 24.06.2020 IT 202000015196
(43) Date of publication of application: 03.05.2023
(73) Proprietor: DROPMI S.r.l., 00154 Roma (IT)
(72) Inventor: PAPALEO, Giovanni, 00154 Roma (IT); COSENTINO, Claudio, 00154 Roma (IT); COLOCCI, Massimo, 00154 Roma (IT); VARRIALE, Anna, 00154 Roma (IT); SARTORI, Michele, 00154 Roma (IT); LOYSON, Samuel, 92040 Paris La Défense (FR); HAEFFNER, Hugues, 92040 Paris La Défense (FR); LOUVET, Pierre-Emmanuel, 92040 Paris La Défense (FR); PREGO, Nicolas, 92040 Paris La Défense (FR); DUPONT, Eléonore, 92040 Paris La Défense (FR)
(74) Representative: IP Sextant s.r.l.
(86) International application number: PCT/IB2021/055542
(87) International publication number: WO 2021/260573

(56) References cited:
- EP-A1- 3 591 350
- WO-A1-2011/044289
- WO-A1-2015/154135
- US-A1- 2013 248 023
- US-A1- 2018 292 248
- US-A1- 2020 165 801
- US-B2- 8 719 187

## Description

### Technical Field

The present invention concerns a water meter that allows in a simple, fast, reliable, flexible, effective and efficient way to dynamically control supply of water at a customer site at least on the basis of remote water flow regulating valve setting data correlated to a customer profile.

The present invention further concerns a system of monitoring water supply at a plurality of customer sites and a computer-implemented method of dynamically controlling a water supply at a customer site, as well as computer programs and computer-readable storage media implementing the computer-implemented method.

### State of the Art

It is known that water meters are used by water providers to monitor water consumption at customer sites, such as for instance: a single residential apartment, where water is supplied to the customer according to a domestic contract; a residential condominium having a certain number of domestic users, where water is supplied to the customer according to a residential condominium contract; a restaurant; a hospital; a prison; a medical office; a public administration office; a school or university; a factory.

A problem with the prior art water meter is that they are not dynamically controlled in a flexible, effective and efficient manner so as to regulate water supply at one or more different sites in reaction to specific circumstances which can vary in time.

Document WO 2019/220332 A1 discloses a prepaid water management system comprising a smart valve controller having a valve to control waterflow through a water carrying conduit and a water meter to measure the water flow volume through the water carrying conduit, which wirelessly communicate with each other and with a user interface allowing a user to view data regarding water use and to enter purchased water credits, wherein smart valve controller either fully opens or fully closes the valve depending on whether a sufficient or insufficient water credit is available to the user.

Documents US 8719187 B2 and EP 3591350 A1 disclose other prior art water meters, while document WO 2015/154135 A1 discloses a control system allowing a user to control water flow at user's premises.

However, these prior art systems do not allow to dynamically control the smart valve controller in a flexible, effective and efficient manner in response to specific water supply circumstances.

It is an object of this invention, therefore, to overcome the aforementioned problems of the prior art, namely by allowing in a simple, fast, reliable, flexible, effective and efficient way to dynamically control supply of water at customer sites at least on the basis of customer profiles taking into account the conditions of the water distribution network.

### Summary of Invention

It is specific subject-matter of the present invention a water meter, configured to supply water at a customer site, including:
- a water flow regulating valve configured to assume at least three predetermined positions including a fully open position configured to let a maximum water flow to be supplied at said customer site, a closed position configured to prevent water flow to be supplied at said customer site, and at least one intermediate position configured to let at least one respective intermediate water flow, lower than the maximum water flow, to be supplied at said customer site;
- an actuator operatively coupled to the water flow regulating valve and configured to automatically set a current position of the water flow regulating valve selected out of said at least three predetermined positions;
- a pressure sensor configured to detect water pressure upstream of the water flow regulating valve;
- a processing and communicating unit, operatively connected to the actuator, that is configured to communicate with a remote water provider centre to receive water flow regulating valve setting data, wherein said processing and communicating unit is further operatively connected to said pressure sensor to receive water pressure data sensed by said pressure sensor;
wherein said processing and communicating unit is configured to control the actuator to cause the water flow regulating valve to assume said current position corresponding to valve position setting data that are correlated to said water flow regulating valve setting data and to said water pressure upstream of said water flow regulating valve detected by said pressure sensor, wherein said water flow regulating valve setting data are in turn correlated to a customer profile.

According to a further aspect of the invention, said customer profile may comprise one or more data selected from the group comprising billing data, a priority indicator, a location, consumption data, contractual data and plant data.

According to a further aspect of the invention, said processing and communicating unit may be configured to send said water pressure data sensed by said pressure sensor to the remote water provider centre, wherein said water flow regulating valve setting data are further correlated to said at least part of said water pressure data sensed by said pressure sensor, wherein said valve position setting data correspond to said water flow regulating valve setting data received from said remote water provider centre, thereby said valve position setting data are further correlated to said at least part of said water pressure data sensed by said pressure sensor through correlation of said water flow regulating valve setting data to said at least part of said water pressure data.

According to another aspect of the invention, said processing and communicating unit may be configured to determine said valve position setting data on the basis of both said water flow regulating valve setting data received from said remote water provider centre and said at least part of said water pressure data sensed by said pressure sensor.

According to an additional aspect of the invention, said water flow regulating valve setting data may include or consist of a target maximum water flow rate setpoint, thereby said valve position setting data are correlated to said target maximum water flow rate setpoint and said at least part of said water pressure data.

According to a further aspect of the invention, said water pressure data may include or consist of a current water pressure, and said processing and communicating unit may be configured to determine said current position of the water flow regulating valve by means of a look-up table stored in said processing and communicating unit, wherein said look-up table includes a set of positions of the water flow regulating valve each corresponding to a respective valve position setting data consisting of a pair of target maximum water flow rate setpoint and current water pressure.

According to an additional aspect of the invention, said pressure sensor may be configured to detect water pressure upstream of the water flow regulating valve periodically, wherein said processing and communicating unit is optionally configured to estimate a water static pressure upstream of the water flow regulating valve.

According to another aspect of the invention, said processing and communicating unit may be configured to issue an alert and to control the actuator to set said current position of the water flow regulating valve at the closed position when said water pressure data correspond to a first alert condition, wherein the water meter optionally further includes a push button configured to acknowledge said alert and to cause said processing and communicating unit to control the actuator to change said current position of said water flow regulating valve from said closed position. For instance, such first alert condition may occur when the value of the water pressure is either exceeding a maximum pressure threshold or below a minimum pressure threshold (e.g., in the case where water pressure is outside a pressure range that is admissible for the proper operation of the water meter when no leakage is present in the area of the water distribution network to which the water meter belongs).

According to a further aspect of the invention, said processing and communicating unit may be configured to issue an alert and to control the actuator to set said current position of the water flow regulating valve at the closed position when said water flow regulating valve setting data correspond to a second alert condition, wherein the water meter optionally further includes a push button configured to acknowledge said alert and to cause said processing and communicating unit to control the actuator to change said current position of said water flow regulating valve from said closed position. For instance, such second alert condition may occur when the customer has not duly payed long outstanding overdue payments despite several dunning notices, or when the area of the water distribution network to which the water meter belongs is affected by works or leakage).

According to another aspect of the invention, wherein said water flow regulating valve setting data may include or consist of said current position of the water flow regulating valve.

According to an additional aspect of the invention, said processing and communicating unit may be configured to bidirectionally communicate with the remote water provider centre through a Low-Power Wide-Area (LPWAN) bidirectional communication network, optionally through a Narrowband Internet of Things (NB-loT) bidirectional communication network, more optionally according to an encrypted communication protocol.

It is further specific subject-matter of the present invention a system of monitoring water supply at a plurality of customer sites, including a remote water provider centre and a plurality of water meters each located at a respective customer site, wherein each water meter is the water meter as previously described, thereby the processing and communicating unit of each water meter is configured to communicate with the remote water provider centre, wherein the remote water provider centre comprises a processing device configured to determine said water flow regulating valve setting data correlated to the customer profile.

It is still specific subject-matter of the present invention a computer-implemented method of dynamically controlling a water supply at a customer site, including the following steps:
A. having a customer profile;
B. detecting water pressure upstream of a water flow regulating valve at said customer site to provide water pressure data;
C. determining water flow regulating valve setting data correlated to a customer profile; and
D. automatically setting a current position of said water flow regulating valve that corresponds to valve position setting data that are correlated to said water flow regulating valve setting data and to said water pressure detected upstream of said water flow regulating valve, wherein said current position is selected out of at least three predetermined positions that the water flow regulating valve is configured to assume and that include a fully open position configured to let a maximum water flow to be supplied at said customer site, a closed position configured to prevent water flow to be supplied at said customer site, and at least one intermediate position configured to let at least one respective intermediate water flow, lower than the maximum water flow, to be supplied at said customer site.

In particular, "having a customer profile" may mean either determining a customer profile, receiving a customer profile or retrieving a customer profile from a database.

It is another specific subject-matter of the present invention a set of one or more computer programs comprising instructions which, when executed by a processing and communicating unit of the water meter according to any one of claims 1-10 and a processing device of a remote water provider centre, cause said processing and communicating unit and said processing device to carry out the computer-implemented method of dynamically controlling a water supply at a customer site as previously described.

It is an additional specific subject-matter of the present invention a set of one or more computer-readable storage media having stored thereon the set of one or more computer programs just described.

The advantages offered by the invention are numerous and significant.

In fact, the water meter allows to dynamically control the supply of water at a customer site by means of a water flow regulating valve that is configured to assume any of a fully open position (configured to let a maximum water flow to be supplied at said customer site), a closed position (configured to prevent water flow to be supplied at said customer site) and at least one intermediate position configured to let at least one respective intermediate water flow. The water meter flow regulating valve includes an actuator configured to automatically set the water flow regulating valve at a current position that corresponds to valve position setting data that are correlated to water flow regulating valve setting data received by the water meter from a remote water provider centre, wherein the water flow regulating valve setting data are in turn correlated to a customer profile. In other words, the water flow regulating valve is actuated on the basis of a remote control.

Such remote control (namely the current position of the water flow regulating valve) may be easily correlated also to a combination of parameters measured at the consumption site, in particular pressure (and/or even flow rate and/or flow volume), by means of a software component executed at least in part at the remote water provider centre. In particular, water pressure data may be used to properly set the position of the water flow regulating valve, e.g. when the water flow regulating valve setting data includes or consists of a target maximum water flow rate setpoint and the flow rate depends on both valve aperture and water pressure; also, water pressure data received from a plurality of water meter installed at different locations on the water distribution network can be used to find an area affected by a possible leakage.

Optionally, a LPWAN bidirectional communication offering end-to-end loT connectivity solution ensures the data transmission between the remote water provider centre and the water meter at the customer site.

The water meter allows to implement a smart system of monitoring water supply at a plurality of customer sites, wherein a remote water provider centre is configured to communicate with each one of a plurality of water meters according to the invention at respective customer sites, wherein the remote water provider centre is optionally configured to execute an advanced software to calculate the maximum water flow rates setpoints to be applied at respective water meters of the system by setting the corresponding current positions of the related water flow regulating valves.

The invention allows to carry out advanced water flow control functions at a customer site, wherein the current position of the related water flow regulating valve is automatically set on the basis of valve position setting data that are correlated to water flow regulating valve setting data received by the water meter from a remote water provider centre, wherein the water flow regulating valve setting data are in turn correlated to a customer profile and to the water pressure upstream of the water flow regulating valve detected by a pressure sensor (possibly through a correlation to at least part of water pressure data sensed by the pressure sensor) with which the water meter is provided.

### Brief description of the drawings

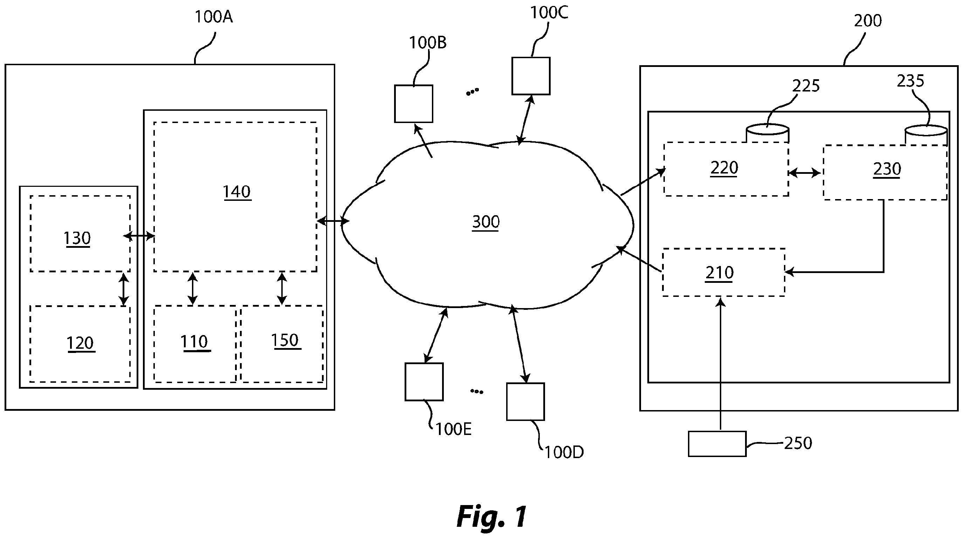

The present invention will be now described, by way of illustration and not by way of limitation, according to its preferred embodiments, by particularly referring to Figure 1 of the annexed drawings, showing a schematic block diagram of a preferred embodiment of the system of monitoring water supply at a plurality of customer sites, including a remote water provider centre and a plurality of water meters according to the invention.

### Detailed description of the invention

With reference to Figure 1, it may be observed that a preferred embodiment of the system of monitoring water supply at a plurality of customer sites includes a plurality of water meters according to the invention, five of which are shown and indicated by reference numerals 100A, 100B, 100C, 100D and 100E.

Each water meter is installed to supply water at a respective customer site and is connected to a remote water provider centre 200 through a communication network 300, that in the preferred embodiment of the water supply monitoring system comprises the Internet.

Figure 1 shows in detail only the arrangement of water meter 100A, as described in the following, but it should be understood that the other water meters 100B, 100C, 100D and 100E have similar arrangements.

The water meter 100A conventionally includes a metering device 110 configured to measure the amount of water supplied at the customer site. The metering device 110 is based on mechanical and/or electronic technology and optionally employs a flow rate sensor configured to measure the flow rate of water supplied at the customer site.

The water meter 100A also includes a water flow regulating valve 120 configured to assume at least three predetermined positions including:
- a fully open position, configured to let a maximum water flow to be supplied at said customer site,
- a closed position configured to prevent water flow to be supplied at said customer site, and
- at least one intermediate position configured to let at least one respective intermediate water flow, lower than the maximum water flow, to be supplied at said customer site; optionally, the water meter 100A may have three or four intermediate positions, each one corresponding to a respective intermediate water flow that is different from those of the other intermediate positions.
Optionally, the water flow regulating valve 120 is a mechanical and/or electromechanical valve including or consisting of one or more of ball valves, butterfly valves, needle valves, diaphragm valves, gate valves and plug valves.

Furthermore, the water meter 100A includes an actuator 130 operatively coupled to the water flow regulating valve 120 and configured to automatically set the position of the water flow regulating valve 120 among the (at least three) predetermined positions.

The water meter 100A also includes a processing and communicating unit 140 that is operatively connected to the metering device 110 and to the actuator 130. The processing and communicating unit 140 is configured to control the actuator 130 to set the position of the water flow regulating valve 120. Conventionally, the processing and communicating unit 140 is configured to receive measurement data from the metering device 110 and to check and/or control the operation thereof.

The processing and communicating unit 140 is configured to communicate with the remote water provider centre 200 through the communication network 300. In particular, the remote water provider centre 200 includes a processing device 210 that is configured to send water flow regulating valve setting data to the processing and communicating unit 140, wherein the water flow regulating valve setting data are correlated to a customer profile corresponding to the customer site where the water meter 100A is installed. In turn, the processing and communicating unit 140 determines and sends valve position setting data to the actuator 130 to control the latter to set the position of the water flow regulating valve 120, wherein the valve position setting data are correlated to said water flow regulating valve setting data.

The customer profile may comprise one or more of the following:
- billing data of the customer concerned, such as possible presence of overdue payments and related delays for the customer concerned;
- a priority indicator of the customer concerned, optionally indicating any obligation on the water provider not to interrupt the water supply (as in the case where the water supply is installed at a sensitive site, such as a hospital or prison) and/or a level of tolerability of an interruption of the water supply; for instance, interruptions may be progressively less tolerable according to the following series of customer sites: a single residential apartment (where interruptions are the most tolerable), a residential condominium; a public administration office or restaurant; a school or university; a medical office; a factory; a hospital or prison (where interruptions are the least tolerable);
- a location of the customer site, for instance in terms of GPS data and/or in terms of position in the water distribution network;
- consumption data of the customer site;
- contractual data of the customer concerned, such as type of contract and/or type of customer; and
- plant data of the customer site, such as the diameter of the water carrying conduit through which the water meter supplies water at the customer site.

The remote water provider centre 200 also includes a MDM (Meter Data Management) system 220, provided with a measurement database 225, and a CRM (Customer Relationship Management) and billing system 230, provided with a customer database 235, which are connected or connectable to each other. The processing device 210 is connected or connectable with both the MDM system 220 and the CRM and billing system 230. In particular, the remote water provider centre 200 may be implemented either at a single site by means of one or more servers connected to each other or through a cloud system of geographically distributed servers connected to each other. It must be noted that in other embodiments of the present invention the MDM system 220 and the CRM and billing system 230 may be integrated into a single system, and/or the measurement database 225 and the customer database 235 may be integrated into a single database.

The MDM system 220 receives, through the communication network 300, the measured data from each one of the plurality of water meters 100A, 100B, 100C, 100D and 100E and it stores them in the measurement database 225 in association with the respective water meter (and/or with the respective customer and/or customer site).

The CRM and billing system 230 stores in the customer database 235 data related to the customer and customer site where each one of the plurality of water meters 100A, 100B, 100C, 100D and 100E is installed; furthermore, the CRM and billing system 230 receives customer consumption data from the MDM system 220 to generate and store billing data associated with the respective customer and customer site in the customer database 235.

In other words, for the customer profile corresponding to the customer site where each one of the plurality of water meters 100A, 100B, 100C, 100D and 100E is installed, the measurement database 225 and the customer database 235 store data of the customer profile related to each; namely, the measurement database 225 stores consumption data, while the customer database 235 may store one or more out of billing data, priority indicator, location, contractual data and plant data.

The processing device 210 is configured to receive from the MDM system 220 and the CRM and billing system 230 the customer profile. Furthermore, the processing device 210 is connected to an interface module 250 from which it is configured to receive environmental data, such as weather and weather forecast data, possible leakage data on leakages in the water distribution network, event data on possible events affecting the water supply in the water distribution network. The interface module 250 may include one or more manual interface devices (such as a keyboard), one or more communication devices (some of which can be connected to sensors distributed along the water distribution network), one or more sensing devices (such as one or more cameras, one or more weather sensors, one or more temperature and/or humidity sensors).

The processing device 210 is also configured to generate water flow regulating valve setting data correlated to the customer profile, and possibly to the environmental data received from the interface module 250. Moreover, the processing device 210 is configured to send, through the communication network 300, the thus generated water flow regulating valve setting data to the processing and communicating unit 140 of the water meter corresponding to the customer and customer profile concerned (as shown in Figure 1 with reference to the water meter 100A).

In this way, the remote water provider centre 200 is configured to control the position of the water flow regulating valve 120 of the water meter 100A on the basis of the customer profile and possibly of specific circumstances occurring in the environmental context, including both the specific customer site where the water meter 100A is installed and at least part of the water distribution network to which the water meter 100A belongs. Some examples of monitoring the water supply, including such remote control, will be given later.

The water meter 100A according to the invention also includes a pressure sensor 150 configured to detect water pressure upstream of the water flow regulating valve 120, wherein said processing and communicating unit 140 is operatively connected to the pressure sensor 150 to receive water pressure data sensed by the pressure sensor 150. In this case, the valve position setting data are advantageously further correlated to at least part of said water pressure data sensed by the pressure sensor 150; for instance, the valve position setting data can be correlated to a specific water pressure data sensed at a specific time, or to a pressure average along a time window preceding a certain time, or to a trend (i.e. a derivative in time) of the pressure data. Advantageously, the water pressure data sensed by the pressure sensor 150 are used to adjust the position of the water flow regulating valve 120 as a function of a target maximum flow rate and water pressure.

In a first arrangement, the processing and communicating unit 140 may be configured to send the water pressure data sensed by the pressure sensor 150 to the remote water provider centre 200, namely through the communication network 300 to the MDM system 220 that stores them in the measurement database 225 in association with the respective water meter (and/or with the respective customer and/or customer site). In this case, the processing device 210 is configured to receive from the MDM system 220 also at least part of said water pressure data sensed by the pressure sensor 150 and to generate the water flow regulating valve setting data correlated to both the customer profile and said at least part of said water pressure data (and possibly to the environmental data received from the interface module 250) and the valve position setting data correspond to the water flow regulating valve setting data received by the processing and communicating unit 140 from the processing device 210 of the remote water provider centre 200. In other words, the valve position setting data are correlated to both the customer profile and said at least part of said water pressure data (and possibly to the environmental data received from the interface module 250) through the correlation of said water flow regulating valve setting data to both the customer profile and said at least part of said water pressure data (and possibly to the environmental data received from the interface module 250). In particular, said part of said water pressure data may include or consist of a single water pressure, e.g. a current (or a mean) water pressure, and the processing device 210 may be configured to generate the water flow regulating valve setting data as coinciding with the position of the water flow regulating valve 120 (or the valve position setting data) by means of a look-up table stored in the processing device 210, wherein said look-up table includes a set of positions of the water flow regulating valve 120 each corresponding to a respective valve position setting data consisting of a pair of customer profile data and current (or mean) water pressure. Optionally, the processing and communicating unit 140 may be configured to issue an alert and to control the actuator 130 to set the position of the water flow regulating valve 120 at the closed position when the water flow regulating valve setting data correspond to an alert condition; in this case, the water meter 100A may further include a push button configured to acknowledge said alert and to cause the processing and communicating unit 140 to control the actuator 130 to change the position of the water flow regulating valve 120 from said closed position.

Alternatively, in a second arrangement, the processing and communicating unit 140 determines the valve position setting data on the basis of both the water flow regulating valve setting data (correlated to the customer profile and possibly to the environmental data received from the interface module 250) received from the processing device 210 of the remote water provider centre 200 and at least part of said water pressure data sensed by the pressure sensor 150 and received therefrom. Thereby, the valve position setting data are correlated to both the customer profile and said at least part of said water pressure data (and possibly to the environmental data received from the interface module 250). In particular, the water flow regulating valve setting data may include or consist of a target maximum water flow rate setpoint; in other words, the valve position setting data may be correlated to such target maximum water flow rate setpoint and said at least part of said water pressure data. In this case, said part of said water pressure data may include or consist of a single water pressure, e.g. a current (or a mean) water pressure, and the processing and communicating unit 140 may be configured to determine the current position of the water flow regulating valve 120 (or the valve position setting data) by means of a look-up table stored in the processing and communicating unit 140, wherein said look-up table includes a set of positions of the water flow regulating valve 120 each corresponding to a respective valve position setting data consisting of a pair of target maximum water flow rate setpoint and current (or mean) water pressure. Optionally, the processing and communicating unit 140 may be configured to issue an alert and to control the actuator 130 to set the position of the water flow regulating valve 120 at the closed position when the water pressure data sensed by the pressure sensor 150 correspond to an alert condition; similarly to what illustrated above, the water meter 100A may include a push button configured to acknowledge said alert and to cause the processing and communicating unit 140 to control the actuator 130 to change the position of the water flow regulating valve 120 from said closed position.

Optionally, the processing and communicating unit 140 of the water meter 100A can communicate with the processing device 210 of the remote water provider centre 200 the send and/or receive data periodically, e.g. once per day.

Optionally, power for the electronic components of the water meter 100A is supplied by at least one battery, more optionally including at least one rechargeable battery, housed in a compartment of the water meter 100A; in particular, the electronic components of the water meter 100A include the processing and communicating unit 140, the actuator 130 and the pressure sensor 150, as well as the metering device 110 when this is based on electronic technology and the water flow regulating valve 120 when this is an electromechanical valve. In this way, the water meter 100A is provided with an autonomous power supply enabling the electronic components to properly operate. To extend the battery autonomy, the electronic components of the water meter 100A may operate according to appropriate operating modes, such as, for instance, in the case the exchange of data between the processing and communicating unit 140 of the water meter 100A and the processing device 210 of the remote water provider centre 200 occurs periodically and/or upon specific events like intensive use of water at the customer site over a long period of time or major leakages in the area of the water distribution network to which the water meter belongs.

The communication network 300 advantageously provides low-power, long-range, secure and two-way communication, allowing for reliable indoor coverage capability under difficult radio propagation conditions (wherein the water meters can be buried or semi-buried). In particular, the communication network 300 can be a Low-Power Wide-Area (LPWAN) bidirectional communication network, optionally through a Narrowband Internet of Things (NB-loT) bidirectional communication network, more optionally according to an encrypted communication protocol to ensure the secured transmission of sensitive customer data. Communications from water meters to gateways of the LPWAN can be carried out in broadcast mode, allowing multiple gateways to receive the same communication from a single water meter.

Some examples of monitoring the water supply by means of the system according to the invention, allowing for a remote control of the water meters (100A, 100B, 100C, 100D, 100E) by the remote water provider centre 200, are given in the following.

In a first example, a customer in a single residential apartment with a domestic contract, without any "non-interruption" obligation on the water provider (i.e. the customer profile has not a high priority indicator), could be interested in a flow rate reduction in case of need due to periods of water shortage. The customer concerned could be selected either because he/she is within a specific geographical area (in this case the customer database 235 stores the location of the water meter), such as a municipality (for ease of management of communications with citizens regarding water reductions) or because he/she belongs to a specific aqueduct system supplying that customer water meter (to optimize the water distribution from the specific aqueduct). Then, the processing device 210 of the remote water provider centre 200 generates water flow regulating valve setting data taking account of the historical data of pressure and flow rate at the water meter and the water meter diameter. The processing and communicating unit 140 of the water meter controls the actuator 130 to cause the water flow regulating valve 120 to assume a position corresponding to such valve position setting data that are correlated to the water flow regulating valve setting data, i.e. to the historical data of pressure and flow rate and the water meter diameter.

In a second example, a customer is a residential condominium, having a certain number of domestic, without any "non-interruption" obligation on the water provider (i.e. the customer profile has not a high priority indicator). The customer could be a bad payer, i.e. long outstanding overdue payment(s) are stored in the customer database 235 for that customer. Then, the processing device 210 of the remote water provider centre 200 generates water flow regulating valve setting data taking account of the historical data of pressure and flow rate at the water meter, the water meter diameter and the total number of users served by the water meter. The processing and communicating unit 140 of the water meter controls the actuator 130 to cause the water flow regulating valve 120 to assume a position corresponding to such valve position setting data that are correlated to the water flow regulating valve setting data, that is to the historical data of pressure and flow rate at the water meter, the water meter diameter and the total number of users served by the water meter. Also, the processing device 210 of the remote water provider centre 200 could generate such valve position setting data which are correlated to a determination of a value of the water flow rate delivered daily by the water meter and/or of a maximum water volume delivered daily by the water meter, on the basis of the total number of users served by the residential condominium water meter, beyond which maximum water volume the processing device 210 generates valve position setting data to cause the position of the water flow regulating valve 120 to be set at the closed position (i.e. the water flow regulating valve 120 is completely shut off).

In a third example, a customer is an individual customer living in a house with a domestic contract, without any "non-interruption" obligation on the water provider (i.e. the customer profile has not a high priority indicator). On the basis of the location of the water meter (that is stored in the customer database 235) and of the (daily) consumption data measured at the water meter (and stored in the measurement database 225), the processing device 210 of the remote water provider centre 200 triggers an alert because:
- the customer is in a hydraulic zone impacted by a water shortage; and/or
- it detects a regular use of the watering garden system (intensive use of water over a long period of time).
In response, the processing device 210 generates water flow regulating valve setting data so that the processing and communicating unit 140 of the water meter controls the actuator 130, possibly taking account of the local water pressure sensed by the pressure sensor 150, to cause the water flow regulating valve 120 to assume an intermediate position according to a water flow reduction (e.g. 10 to 12 litres/minute), which is sufficient to ensure basic domestic uses including baths and showers but not sufficient for intensive water uses like watering the garden. In this case, the water flow regulating valve setting data can include (or correspond to) an alert to be issued at the water meter, namely by the processing and communicating unit thereof.

In a fourth example, a customer is an individual customer living in a house with a domestic contract, without any "non-interruption" obligation on the water provider (i.e. the customer profile has not a high priority indicator). On the basis of the billing data (stored in the customer database 235), the customer is flagged as a bad payer due to long outstanding overdue payment(s) or late payment(s) despite several dunning notices. An alert is therefore generated in the central IT software. The processing device 210 of the remote water provider centre 200 generates water flow regulating valve setting data so that the processing and communicating unit 140 of the water meter controls the actuator 130, possibly taking account of the local water pressure sensed by the pressure sensor 150, to cause the water flow regulating valve 120 to assume an intermediate position according to a water flow reduction to limit the water flow significantly (e.g. down to 3 to 4 litres/minute) to ensure only essential needs (hand washing, drinking, operating dishwasher or washing machine) but making showering and simultaneous water uses more difficult. After a given period of time, if the overdue payment(s) is(are) still not paid, beyond a threshold volume of water supplied daily by the water meter (e.g. 50 litres per person per day), the processing device 210 generates valve position setting data to cause the position of the water flow regulating valve 120 to be set at the closed position (i.e. the water flow regulating valve 120 is completely shut off). Also in this case, the water flow regulating valve setting data can include (or correspond to) an alert to be issued at the water meter, namely by the processing and communicating unit thereof.

In a fifth example, a customer is an individual customer living in a house with a domestic contract, without any "non-interruption" obligation on the water provider (i.e. the customer profile has not a high priority indicator). On the basis of the past consumption data measured at the water meter (and stored in the measurement database 225), a major leakage is detected by the processing device 210 of the remote water provider centre 200, e.g. triggered by a continuous consumption flow higher than 60 litres/hour (which is not due to the filling of a swimming pool). The processing device 210 of the remote water provider centre 200 generates water flow regulating valve setting data causing an alert to be issued at the water meter (and possibly an alert is also sent to a device of the customer, such as a smartphone) to inform the customer, and possibly to propose to apply a setpoint of "water flow reduction" or "water cutoff". If the customer agrees and a related response signal is sent to the processing device 210 by means of the interface module 250, the processing device 210 of the remote water provider centre 200 generates water flow regulating valve setting data so that the processing and communicating unit 140 of the water meter controls the actuator 130, possibly taking account of the local water pressure sensed by the pressure sensor 150, to cause the water flow regulating valve 120 to assume either an intermediate position according to a water flow reduction to limit the water flow significantly or the closed position (i.e. the water flow regulating valve 120 is completely shut off). In any case, it must be noted that issuing of an alert at the water meter (and the possible alert also sent to a device of the customer) is not an essential feature for the invention.

The preferred embodiments of this invention have been described and a number of variations have been suggested hereinbefore, but it should be understood that those skilled in the art can make variations and changes, without so departing from the scope of protection thereof, as defined by the attached claims.

## Claims

1. Water meter (100A), configured to supply water at a customer site, including:
- a water flow regulating valve (120) configured to assume at least three predetermined positions including a fully open position configured to let a maximum water flow to be supplied at said customer site, a closed position configured to prevent water flow to be supplied at said customer site, and at least one intermediate position configured to let at least one respective intermediate water flow, lower than the maximum water flow, to be supplied at said customer site;
- an actuator (130) operatively coupled to the water flow regulating valve (120) and configured to automatically set a current position of the water flow regulating valve (120) selected out of said at least three predetermined positions;
- a pressure sensor (150) configured to detect water pressure upstream of the water flow regulating valve (120);
- a processing and communicating unit (140), operatively connected to the actuator (130), that is configured to communicate with a remote water provider centre (200) to receive water flow regulating valve setting data, wherein said processing and communicating unit (140) is further operatively connected to said pressure sensor (150) to receive water pressure data sensed by said pressure sensor (150);
wherein said processing and communicating unit (140) is configured to control the actuator (130) to cause the water flow regulating valve (120) to assume said current position corresponding to valve position setting data that are correlated to said water flow regulating valve setting data and to said water pressure upstream of said water flow regulating valve (120) detected by said pressure sensor (150), wherein said waterflow regulating valve setting data are in turn correlated to a customer profile.

2. Water meter (100A) according to claim 1, wherein said processing and communicating unit (140) is configured to send said water pressure data sensed by said pressure sensor (150) to the remote water provider centre (200), wherein said water flow regulating valve setting data are further correlated to said at least part of said water pressure data sensed by said pressure sensor (150), wherein said valve position setting data correspond to said water flow regulating valve setting data received from said remote water provider centre (200), thereby said valve position setting data are further correlated to at least part of said water pressure data sensed by said pressure sensor (150) through correlation of said water flow regulating valve setting data to said at least part of said water pressure data.

3. Water meter (100A) according to claim 1, wherein said processing and communicating unit (140) is configured to determine said valve position setting data on the basis of both said water flow regulating valve setting data received from said remote water provider centre (200) and at least part of said water pressure data sensed by said pressure sensor (150).

4. Water meter (100A) according to claim 3, wherein said water flow regulating valve setting data include or consist of a target maximum water flow rate setpoint, thereby said valve position setting data are correlated to said target maximum water flow rate setpoint and said at least part of said water pressure data.

5. Water meter (100A) according to claim 4, wherein said water pressure data include or consist of a current water pressure, and wherein said processing and communicating unit (140) is configured to determine said current position of the water flow regulating valve (120) by means of a look-up table stored in said processing and communicating unit (140), wherein said look-up table includes a set of positions of the water flow regulating valve (120) each corresponding to a respective valve position setting data consisting of a pair of target maximum water flow rate setpoint and current water pressure.

6. Water meter (100A) according to any one of claims 1 to 5, wherein said pressure sensor (150) is configured to detect water pressure upstream of the water flow regulating valve (120) periodically, wherein said processing and communicating unit (140) is optionally configured to estimate a water static pressure upstream of the water flow regulating valve (120).

7. Water meter (100A) according to any one of claims 1 to 6, wherein said processing and communicating unit (140) is configured to issue an alert and to control the actuator (130) to set said current position of the water flow regulating valve (120) at the closed position when said water pressure data correspond to a first alert condition, wherein the water meter (100A) optionally further includes a push button configured to acknowledge said alert and to cause said processing and communicating unit (140) to control the actuator (130) to change said current position of said water flow regulating valve (120) from said closed position.

8. Water meter (100A) according to any one of claims 1 to 7, wherein said processing and communicating unit (140) is configured to issue an alert and to control the actuator (130) to set said current position of the water flow regulating valve (120) at the closed position when said water flow regulating valve setting data correspond to a second alert condition, wherein the water meter (100A) optionally further includes a push button configured to acknowledge said alert and to cause said processing and communicating unit (140) to control the actuator (130) to change said current position of said water flow regulating valve (120) from said closed position.

9. Water meter (100A) according to any one of claims 1 to 8, wherein said water flow regulating valve setting data include or consist of said current position of the water flow regulating valve (120).

10. Water meter (100A) according to any one of claims 1 to 9, wherein said processing and communicating unit (140) is configured to bidirectionally communicate with the remote water provider centre (200) through a Low-Power Wide-Area (LPWAN) bidirectional communication network (300), optionally through a Narrowband Internet of Things (NB-loT) bidirectional communication network, more optionally according to an encrypted communication protocol.

11. System of monitoring water supply at a plurality of customer sites, including a remote water provider centre (200) and a plurality of water meters (100A, 100B, 100C, 100D, 100E) each located at a respective customer site, wherein each water meter is the water meter according to any one of claims 1 to 10, thereby the processing and communicating unit (140) of each water meter is configured to communicate with the remote water provider centre (200), wherein the remote water provider centre (200) comprises a processing device (210) configured to determine said water flow regulating valve setting data correlated to the customer profile.

12. Computer-implemented method of dynamically controlling a water supply at a customer site, including the following steps:
A. having a customer profile;
B. detecting water pressure upstream of a water flow regulating valve (120) at said customer site to provide water pressure data;
C. determining water flow regulating valve setting data correlated to a customer profile; and
D. automatically setting a current position of said water flow regulating valve (120) that corresponds to valve position setting data that are correlated to said water flow regulating valve setting data and to said water pressure detected upstream of said water flow regulating valve (120), wherein said current position is selected out of at least three predetermined positions that the waterflow regulating valve (120) is configured to assume and that include a fully open position configured to let a maximum water flow to be supplied at said customer site, a closed position configured to prevent water flow to be supplied at said customer site, and at least one intermediate position configured to let at least one respective intermediate water flow, lower than the maximum water flow, to be supplied at said customer site.

13. Computer-implemented method according to claim 12, wherein said customer profile comprises one or more data selected from the group comprising billing data, a priority indicator, a location, consumption data, contractual data and plant data.

14. Set of one or more computer programs comprising instructions which, when executed by a processing and communicating unit (140) of a water meter (100A) according to any one of claims 1-10 and a processing device (210) of a remote water provider centre (200), cause said processing and communicating unit (140) and said processing device (210) to carry out the computer-implemented method of dynamically controlling a water supply at a customer site according to any one of claims 12 to 13.

15. Set of one or more computer-readable storage media having stored thereon the set of one or more computer programs according to claim 14.

## Patentansprüche

1. Wasserzähler (100A), der so konfiguriert ist, dass er Wasser an einen Kundenstandort liefert, umfassend:
- ein Wasserdurchflussregulierventil (120), das so konfiguriert ist, dass es mindestens drei vorbestimmte Positionen einnehmen kann, einschließlich einer vollständig geöffneten Position, die so konfiguriert ist, dass ein maximaler Wasserdurchfluss an den Kundenstandort geliefert werden kann, einer geschlossenen Position, die so konfiguriert ist, dass kein Wasserdurchfluss an den Kundenstandort geliefert werden kann, und mindestens einer Zwischenposition, die so konfiguriert ist, dass mindestens ein entsprechender Zwischenwasserdurchfluss, der niedriger als der maximale Wasserdurchfluss ist, an den Kundenstandort geliefert werden kann;
- einen Aktuator (130), der betriebsmäßig mit dem Wasserdurchflussregulierventil (120) gekoppelt und so konfiguriert ist, dass er automatisch eine aktuelle Position des Wasserdurchflussregulierventils (120) einstellt, die aus den mindestens drei vorbestimmten Positionen ausgewählt ist;
- einen Drucksensor (150), der so konfiguriert ist, dass er den Wasserdruck stromaufwärts des Wasserdurchflussregulierventils (120) erfasst;
- eine Verarbeitungs- und Kommunikationseinheit (140), die operativ mit dem Aktuator (130) verbunden ist und die so konfiguriert ist, dass sie mit einem entfernten Wasserversorgungszentrum (200) kommuniziert, um Wasserdurchflussregulierungsventileinstellungsdaten zu empfangen, wobei die Verarbeitungs- und Kommunikationseinheit (140) ferner operativ mit dem Drucksensor (150) verbunden ist, um Wasserdruckdaten zu empfangen, die von dem Drucksensor (150) erfasst werden;
wobei die Verarbeitungs- und Kommunikationseinheit (140) so konfiguriert ist, dass sie den Aktuator (130) steuert, um zu bewirken, dass das Wasserdurchflussregulierventil (120) die aktuelle Position einnimmt, die den Ventilpositionseinstelldaten entspricht, die mit den Wasserdurchflussregulierventil-Einstelldaten und dem Wasserdruck stromaufwärts des Wasserdurchflussregulierventils (120), der von dem Drucksensor (150) erfasst wird, korreliert sind, wobei die Wasserdurchflussregulierventil-Einstelldaten ihrerseits mit einem Kundenprofil korreliert sind.

2. Wasserzähler (100A) nach Anspruch 1, wobei die Verarbeitungs- und Kommunikationseinheit (140) so konfiguriert ist, dass sie die von dem Drucksensor (150) erfassten Wasserdruckdaten an das entfernte Wasserversorgungszentrum (200) sendet, wobei die Wasserdurchflussregulierungsventileinstellungsdaten ferner mit den mindestens einem Teil der von dem Drucksensor (150) erfassten Wasserdruckdaten korreliert sind, wobei die Ventilpositionseinstelldaten den von der entfernten Wasserversorgungszentrale (200) empfangenen Wasserdurchflussregulierungsventileinstelldaten entsprechen, wodurch die Ventilpositionseinstelldaten ferner mit zumindest einem Teil der von dem Drucksensor (150) erfassten Wasserdruckdaten durch Korrelation der Wasserdurchflussregulierungsventileinstelldaten mit dem zumindest einen Teil der Wasserdruckdaten korreliert werden.

3. Wasserzähler (100A) nach Anspruch 1, wobei die Verarbeitungs- und Kommunikationseinheit (140) so konfiguriert ist, dass sie die Ventilpositionseinstelldaten auf der Grundlage sowohl der von der entfernten Wasserversorgungszentrale (200) empfangenen Wasserdurchflussregulierventil-Einstelldaten als auch zumindest eines Teils der von dem Drucksensor (150) erfassten Wasserdruckdaten bestimmt.

4. Wasserzähler (100A) nach Anspruch 3, wobei die Einstelldaten des Wasserdurchflussregelventils einen Sollwert für die maximale Wasserdurchflussmenge enthalten oder daraus bestehen, wodurch die Einstelldaten der Ventilposition mit dem Sollwert für die maximale Wasserdurchflussmenge und dem mindestens einen Teil der Wasserdruckdaten korreliert werden.

5. Wasserzähler (100A) nach Anspruch 4, wobei die Wasserdruckdaten einen aktuellen Wasserdruck enthalten oder daraus bestehen, und wobei die Verarbeitungs- und Kommunikationseinheit (140) so konfiguriert ist, dass sie die aktuelle Position des Wasserdurchflussregulierventils (120) mittels einer in der Verarbeitungs- und Kommunikationseinheit (140) gespeicherten Nachschlagetabelle bestimmt, wobei die Nachschlagetabelle einen Satz von Positionen des Wasserdurchflussregulierventils (120) enthält, die jeweils den entsprechenden Ventilpositionseinstelldaten entsprechen, die aus einem Paar aus dem Zielsollwert für die maximale Wasserdurchflussrate und dem aktuellen Wasserdruck bestehen.

6. Wasserzähler (100A) nach einem der Ansprüche 1 bis 5, wobei der Drucksensor (150) so konfiguriert ist, dass er den Wasserdruck stromaufwärts des Wasserdurchflussregulierventils (120) periodisch erfasst, wobei die Verarbeitungs- und Kommunikationseinheit (140) optional so konfiguriert ist, dass sie einen statischen Wasserdruck stromaufwärts des Wasserdurchflussregulierventils (120) schätzt.

7. Wasserzähler (100A) nach einem der Ansprüche 1 bis 6, wobei die Verarbeitungs- und Kommunikationseinheit (140) so konfiguriert ist, dass sie einen Alarm ausgibt und den Aktuator (130) steuert, um die aktuelle Position des Wasserdurchflussregulierventils (120) auf die geschlossene Position einzustellen, wenn die Wasserdruckdaten einer ersten Alarmbedingung entsprechen, wobei der Wasserzähler (100A) optional weiterhin einen Druckknopf enthält, der so konfiguriert ist, dass er den Alarm bestätigt und die Verarbeitungs- und Kommunikationseinheit (140) veranlasst, das Stellglied (130) zu steuern, um die aktuelle Position des Wasserdurchflussregelventils (120) von der geschlossenen Position zu ändern.

8. Wasserzähler (100A) nach einem der Ansprüche 1 bis 7, wobei die Verarbeitungs- und Kommunikationseinheit (140) so konfiguriert ist, dass sie einen Alarm ausgibt und das Stellglied (130) so steuert, dass es die aktuelle Position des Wasserdurchflussregelventils (120) auf die geschlossene Position einstellt, wenn die Einstelldaten des Wasserdurchflussregelventils einem zweiten Alarmzustand entsprechen, wobei der Wasserzähler (100A) optional weiterhin einen Druckknopf enthält, der so konfiguriert ist, dass er den Alarm bestätigt und die Verarbeitungs- und Kommunikationseinheit (140) veranlasst, das Stellglied (130) zu steuern, um die aktuelle Position des Wasserdurchflussregelventils (120) von der geschlossenen Position zu ändern.

9. Wasserzähler (100A) nach einem der Ansprüche 1 bis 8, wobei die Wasserdurchflussregulierventil-Einstelldaten die aktuelle Position des Wasserdurchflussregulierventils (120) enthalten oder aus dieser bestehen.

10. Wasserzähler (100A) nach einem der Ansprüche 1 bis 9, wobei die Verarbeitungs- und Kommunikationseinheit (140) so konfiguriert ist, dass sie über ein bidirektionales Low-Power-Wide-Area (LPWAN)-Kommunikationsnetz (300), optional über ein bidirektionales Schmalband-Internet-der-Dinge (NB-loT)-Kommunikationsnetz, bidirektional mit dem entfernten Wasserversorgungszentrum (200) kommuniziert, und zwar optional gemäß einem verschlüsselten Kommunikationsprotokoll.

11. System zur Überwachung der Wasserversorgung an einer Vielzahl von Kundenstandorten, mit einer entfernten Wasserversorgungszentrale (200) und einer Vielzahl von Wasserzählern (100A, 100B, 100C, 100D, 100E), die sich jeweils an einem entsprechenden Kundenstandort befinden, wobei jeder Wasserzähler der Wasserzähler nach einem der Ansprüche 1 bis 10 ist, wobei die Verarbeitungs- und Kommunikationseinheit (140) jedes Wasserzählers so konfiguriert ist, dass sie mit dem entfernten Wasserversorgungszentrum (200) kommuniziert, wobei das entfernte Wasserversorgungszentrum (200) eine Verarbeitungsvorrichtung (210) umfasst, die so konfiguriert ist, dass sie die mit dem Kundenprofil korrelierten Wasserdurchflussregulierungsventileinstellungsdaten bestimmt.

12. Computer-implementiertes Verfahren zur dynamischen Steuerung einer Wasserversorgung an einem Kunden
Wasserzufuhr an einem Kundenstandort, mit den folgenden Schritten:
A. Erstellen eines Kundenprofils;
B. Erfassen des Wasserdrucks stromaufwärts eines Wasserdurchflussregelventils (120) an dem Kundenstandort, um Wasserdruckdaten bereitzustellen;
C. Bestimmung von Einstelldaten des Wasserdurchflussregelventils, die mit einem Kundenprofil korreliert sind; und
D. automatisches Einstellen einer aktuellen Position des Wasserdurchflussregulierventils (120), die Ventilpositionseinstelldaten entspricht, die mit den Wasserdurchflussregulierventil-Einstelldaten und dem stromaufwärts des Wasserdurchflussregulierventils (120) erfassten Wasserdruck korreliert sind, wobei die aktuelle Position aus mindestens drei vorbestimmten Positionen ausgewählt wird, die das Wasserdurchflussregulierventil (120) so konfiguriert ist, dass es sie einnehmen kann, und die eine vollständig geöffnete Position, die so konfiguriert ist, dass ein maximaler Wasserdurchfluss an den Kundenstandort geliefert werden kann, eine geschlossene Position, die so konfiguriert ist, dass ein Wasserdurchfluss an den Kundenstandort verhindert wird, und mindestens eine Zwischenposition, die so konfiguriert ist, dass mindestens ein jeweiliger Zwischenwasserdurchfluss, der niedriger als der maximale Wasserdurchfluss ist, an den Kundenstandort geliefert werden kann, umfassen.

13. Computerimplementiertes Verfahren nach Anspruch 12, wobei das Kundenprofil ein oder mehrere Daten umfasst, die aus der Gruppe ausgewählt sind, die Abrechnungsdaten, einen Prioritätsindikator, einen Standort, Verbrauchsdaten, Vertragsdaten und Anlagendaten umfasst.

14. Satz von einem oder mehreren Computerprogrammen mit Anweisungen, die bei Ausführung durch eine Verarbeitungs- und Kommunikationseinheit (140) eines Wasserzählers (100A) nach einem der Ansprüche 1-10 und einer Verarbeitungsvorrichtung (210) einer entfernten Wasserversorgungszentrale (200) ausgeführt werden, die Verarbeitungs- und Kommunikationseinheit (140) und die Verarbeitungsvorrichtung (210) veranlassen, das computerimplementierte Verfahren zur dynamischen Steuerung einer Wasserversorgung an einem Kundenstandort gemäß einem der Ansprüche 12 bis 13 auszuführen.

15. Satz von einem oder mehreren computerlesbaren Speichermedien, auf denen der Satz von einem oder mehreren Computerprogrammen nach Anspruch 14 gespeichert ist.

## Revendications

1. Compteur d'eau (100A) configuré pour fournir de l'eau à un site client, comprenant :
- une soupape de régulation de débit d'eau (120) configurée pour adopter au moins trois positions prédéterminées comprenant une position entièrement ouverte configurée pour permettre à un débit d'eau maximal d'être fourni audit site client, une position fermée configurée pour empêcher le débit d'eau d'être fourni audit site client et au moins une position intermédiaire configurée pour permettre à au moins un débit d'eau intermédiaire respectif, inférieur au débit d'eau maximal, d'être fourni audit site client ;
- un actionneur (130) couplé de manière fonctionnelle à la soupape de régulation de débit d'eau (120) et configuré pour régler automatiquement une position actuelle de la soupape de régulation de débit d'eau (120) sélectionnée parmi lesdites au moins trois positions prédéterminées ;
- un capteur de pression (150) configuré pour détecter une pression d'eau en amont de la soupape de régulation de débit d'eau (120) ;
- une unité de communication et de traitement (140) reliée de manière fonctionnelle à l'actionneur (130), qui est configurée pour communiquer avec un centre fournisseur d'eau distant (200) pour recevoir des données de réglage de soupape de régulation de débit d'eau, où ladite unité de communication et de traitement (140) est en outre reliée de manière fonctionnelle audit capteur de pression (150) pour recevoir des données de pression d'eau détectées par ledit capteur de pression (150) ;
où ladite unité de communication et de traitement (140) est configurée pour commander l'actionneur (130) pour amener la soupape de régulation de débit d'eau (120) à adopter ladite position actuelle correspondant à des données de réglage de position de soupape qui sont corrélées auxdites données de réglage de soupape de régulation de débit d'eau et à ladite pression d'eau en amont de ladite soupape de régulation de débit d'eau (120) détectée par ledit capteur de pression (150), où lesdites données de réglage de soupape de régulation de débit d'eau sont à leur tour corrélées à un profil client.

2. Compteur d'eau (100A) selon la revendication 1, où ladite unité de communication et de traitement (140) est configurée pour envoyer lesdites données de pression d'eau détectées par ledit capteur de pression (150) au centre fournisseur d'eau distant (200), où lesdites données de réglage de soupape de régulation de débit d'eau sont en outre corrélées à ladite au moins une partie desdites données de pression d'eau détectées par ledit capteur de pression (150), où lesdites données de réglage de position de soupape correspondent auxdites données de réglage de soupape de régulation de débit d'eau reçues dudit centre fournisseur d'eau distant (200), de sorte que lesdites données de réglage de position de soupape sont en outre corrélées à au moins une partie desdites données de pression d'eau détectées par ledit capteur de pression (150) via une corrélation desdites données de réglage de soupape de régulation de débit d'eau avec ladite au moins une partie desdites données de pression d'eau.

3. Compteur d'eau (100A) selon la revendication 1, où ladite unité de communication et de traitement (140) est configurée pour déterminer lesdites données de réglage de position de soupape sur la base à la fois desdites données de réglage de soupape de régulation de débit d'eau reçues dudit centre fournisseur d'eau distant (200) et d'au moins une partie desdites données de pression d'eau détectées par ledit capteur de pression (150).

4. Compteur d'eau (100A) selon la revendication 3, où lesdites données de réglage de soupape de régulation de débit d'eau comprennent ou consistent en un point de consigne de débit d'eau maximal cible, de sorte que lesdites données de réglage de position de soupape sont corrélées audit point de consigne de débit d'eau maximal cible et à ladite au moins une partie desdites données de pression d'eau.

5. Compteur d'eau (100A) selon la revendication 4, où lesdites données de pression d'eau comprennent ou consistent en une pression d'eau actuelle, et où ladite unité de communication et de traitement (140) est configurée pour déterminer ladite position actuelle de la soupape de régulation de débit d'eau (120) au moyen d'une table de recherche stockée dans ladite unité de communication et de traitement (140), où ladite table de recherche comprend un ensemble de positions de la soupape de régulation de débit d'eau (120) correspondant chacune à des données de réglage de position de soupape respective consistant en une paire de point de consigne de débit d'eau maximal cible et de pression d'eau actuelle.

6. Compteur d'eau (100A) selon l'une quelconque des revendications 1 à 5, où ledit capteur de pression (150) est configuré pour détecter périodiquement une pression d'eau en amont de la soupape de régulation de débit d'eau (120), où ladite unité de communication et de traitement (140) est optionnellement configurée pour estimer une pression statique d'eau en amont de la soupape de régulation de débit d'eau (120).

7. Compteur d'eau (100A) selon l'une quelconque des revendications 1 à 6, où ladite unité de communication et de traitement (140) est configurée pour émettre une alerte et pour commander l'actionneur (130) pour régler ladite position actuelle de la soupape de régulation de débit d'eau (120) à la position fermée lorsque lesdites données de pression d'eau correspondent à une première condition d'alerte, où le compteur d'eau (100A) comprend en outre optionnellement un bouton poussoir configuré pour accuser la réception de ladite alerte et pour amener ladite unité de communication et de traitement (140) à commander l'actionneur (130) pour changer ladite position actuelle de ladite soupape de régulation de débit d'eau (120) depuis ladite position fermée.

8. Compteur d'eau (100A) selon l'une quelconque des revendications 1 à 7, où ladite unité de communication et de traitement (140) est configurée pour émettre une alerte et pour commander l'actionneur (130) pour régler ladite position actuelle de la soupape de régulation de débit d'eau (120) à la position fermée lorsque lesdites données de réglage de soupape de régulation de débit d'eau correspondent à une seconde condition d'alerte, où le compteur d'eau (100A) comprend en outre optionnellement un bouton poussoir configuré pour accuser la réception de ladite alerte et pour amener ladite unité de communication et de traitement (140) à commander l'actionneur (130) pour changer ladite position actuelle de ladite soupape de régulation de débit d'eau (120) depuis ladite position fermée.

9. Compteur d'eau (100A) selon l'une quelconque des revendications 1 à 8, où lesdites données de réglage de soupape de régulation de débit d'eau comprennent ou consistent en ladite position actuelle de la soupape de régulation de débit d'eau (120).

10. Compteur d'eau (100A) selon l'une quelconque des revendications 1 à 9, où ladite unité de communication et de traitement (140) est configurée pour communiquer de manière bidirectionnelle avec le centre fournisseur d'eau distant (200) par l'intermédiaire d'un réseau de communication bidirectionnel étendu à faible puissance (LPWAN) (300), optionnellement par l'intermédiaire d'un réseau de communication bidirectionnel de l'Internet des Objets à bande étroite (NB-IoT), d'une manière encore plus optionnelle selon un protocole de communication crypté.

11. Système de surveillance d'une alimentation en eau d'une pluralité de sites clients, comprenant un centre fournisseur d'eau distant (200) et une pluralité de compteurs d'eau (100A, 100B, 100C, 100D, 100E) chacun situé à un site client respectif, où chaque compteur d'eau est le compteur d'eau selon l'une quelconque des revendications 1 à 10, de sorte que l'unité de communication et de traitement (140) de chaque compteur d'eau est configurée pour communiquer avec le centre fournisseur d'eau distant (200), où le centre fournisseur d'eau distant (200) comprend un dispositif de traitement (210) configuré pour déterminer lesdites données de réglage de soupape de régulation de débit d'eau corrélées au profil client.

12. Procédé mis en œuvre par ordinateur de commande dynamique d'une alimentation en eau d'un site client, comprenant les étapes suivantes consistant à :
A. avoir un profil client ;
B. détecter une pression d'eau en amont d'une soupape de régulation de débit d'eau (120) audit site client pour fournir des données de pression d'eau ;
C. déterminer des données de réglage de soupape de régulation de débit d'eau corrélées à un profil client ; et
D. régler automatiquement une position actuelle de ladite soupape de régulation de débit d'eau (120) qui correspond à des données de réglage de position de soupape qui sont corrélées auxdites données de réglage de soupape de régulation de débit d'eau et à ladite pression d'eau détectée en amont de ladite soupape de régulation de débit d'eau (120), où ladite position actuelle est sélectionnée parmi au moins trois positions prédéterminées que la soupape de régulation de débit d'eau (120) est configurée pour adopter et qui comprennent une position entièrement ouverte configurée pour permettre à un débit d'eau maximal d'être fourni audit site client, une position fermée configurée pour empêcher le débit d'eau d'être fourni audit site client, et au moins une position intermédiaire configurée pour permettre à au moins un débit d'eau intermédiaire respectif, inférieur au débit d'eau maximal, d'être fourni audit site client.

13. Procédé mis en œuvre par ordinateur selon la revendication 12, où ledit profil client comprend une ou plusieurs données sélectionnées dans le groupe comprenant des données de facturation, un indicateur de priorité, un emplacement, des données de consommation, des données contractuelles et des données d'installation.

14. Ensemble d'un ou de plusieurs programmes informatiques comprenant des instructions qui, lorsqu'elles sont exécutées par une unité de communication et de traitement (140) d'un compteur d'eau (100A) selon l'une quelconque des revendications 1 à 10 et un dispositif de traitement (210) d'un centre fournisseur d'eau distant (200), amènent ladite unité de communication et de traitement (140) et ledit dispositif de traitement (210) à exécuter le procédé mis en œuvre par ordinateur de commande dynamique d'une alimentation en eau d'un site client selon l'une quelconque des revendications 12 à 13.

15. Ensemble d'un ou de plusieurs supports de stockage lisibles par ordinateur sur lequel est stocké l'ensemble d'un ou de plusieurs programmes informatiques selon la revendication 14.
